# EUROPÄISCHE PATENTSCHRIFT

(11) **EP 0 929 268 B1**
(45) Veröffentlichungstag und Bekanntmachung des Hinweises auf die Patenterteilung: **30.01.2002**
(21) Anmeldenummer: 97910281.1
(22) Anmeldetag: 12.09.1997
(51) Int. Cl.: A61C 7/10

(54) **PALATINALSPLITSCHRAUBE**
PALATAL JACKSCREW
APPAREIL DENTAIRE A VERIN MEDIAN

(30) Priorität: 12.09.1996 DE 29615820 U
(43) Veröffentlichungstag der Anmeldung: 21.07.1999
(73) Patentinhaber: Bernhard Förster GmbH, 75172 Pforzheim (DE)
(72) Erfinder: FÖRSTER, Rolf, D-75173 Pforzheim (DE)
(74) Vertreter: Twelmeier, Ulrich, Dipl.Phys.
(86) Internationale Anmeldenummer: EP9704989
(87) Internationale Veröffentlichungsnummer: WO9810708

(56) Entgegenhaltungen:
- DE-U- 8 301 432
- DE-U- 29 504 198
- FR-A- 998 076
- US-A- 5 439 377

## Beschreibung

Die Erfindung geht aus von einer Palatinalsplitschraube mit den im Oberbegriff des Anspruchs 1 angegebenen Merkmalen. Eine solche Schraube ist aus der DE 295 04 198 U1 bekannt. Diese Druckschrift offenbart eine Dehnschraube zum Korrigieren von Fehlstellungen von Zähnen, bei welcher der gegenseitige Abstand zweier Körper mittels einer Spindel veränderbar ist, die ein Betätigungsteil und davon ausgehend ein oder zwei Gewindeteile hat, wobei das Betätigungsteil drehbar in dem einen Körper und ein Gewindeteil in dem anderen Körper drehbar gelagert ist. Geradführungsmittel in Form von zwei parallelen Stangen, welche mit den beiden Körpem in Eingriff stehen, führen sie unter Vermeidung einer Relativdrehung beim Verändern ihres Abstandes gerade. Auf jedem der Gewindeteile der Spindel befindet sich eine Gewindehülse, welche in einer Ausnehmung des jeweiligen Körpers gegen Drehungen gesichert und längs der Spindel geführt ist. Die Spindel verschiebt die Körper nicht unmittelbar, sondem nur mittelbar durch eine die Dehnkraft bestimmende pseudoelastische Feder. Zur Begrenzung der Spannkraft der Feder offenbart die FR 998 076 A bei einer Dehnschraube mit zwei abstandsveränderlichen Körpern und mit normal-elastischer Feder eine Begrenzung der Verschiebebewegung eines die betreffende Feder spannenden Kolbens mit Hilfe eines den betreffenden Körper quer durchsetzenden Stiftes, welche in einer Ausnehmung des Kolbens eingreift und den Verschiebeweg des Kolbens in beiden Richtungen begrenzt.

Aus der Firmenschrift " FORESTADENT 95/96 Katalog " Seite G 1.12 ist eine Palatinalsplitschraube bekannt, welche zum Erweitem eines zu engen Oberkiefers dient, nämlich durch Öffnen des Palatinalspaltes im Oberkiefer. Zu diesem Zweck werden an gegenüberliegenden Molaren des Oberkiefers Bänder angebracht und diese mit Armen verschweißt, die ihrerseits an den beiden abstandsveränderlichen Körpern der Palatinalsplitschraube befestigt sind. Diese Arme werden als Retentionsarme bezeichnet. Durch Vergrößem des Abstandes der beiden Körper der Palatinalsplitschraube wird auf die einander gegenüberliegenden Molaren Druck ausgeübt, welchen diese in den Oberkiefer einleiten. Ist der Druck groß genug, kommt es zum Aufbrechen des Palatinalspaltes. Dieses Aufbrechen wird als "Grünholz-Fraktur" bezeichnet. Um den Palatinalspalt zu öffnen, benötigt man eine Kraft zwischen 3 kp und 20 kp. Mit einer Druckfeder läßt sich das unter den beengten Einbaubedingungen im Oberkiefer nicht erreichen, sondern nur durch direktes Einwirken der Spindel auf die beiden Körper der Palatinalsplitschraube, welche zu diesem Zweck Gewindebohrungen zum Aufnehmen der beiden Gewindeabschnitte der Doppelspindel haben. Durch Verdrehen der Spindel werden die beiden Körper exakt um das durch die Steigung der Spindel bestimmte Maß verstellt. Meistens bricht der Palatinalspalt bei ungefähr 4mm bis 6mm Dehnung der Palatinalsplitschraube auf. Danach wird die Palatinalsplitschraube vom behandelnden Kieferorthopäden in Zeitabständen durch schrittweises Verdrehen der Spindel fortschreitend gedehnt, bis die sogenannte "Stabilisierungsphase" erreicht ist, die sich meist bei 8mm bis 12mm Dehnung einstellt. Die Kraft, die nach der Grünholz-Fraktur bis zum Erreichen der Stabilisierungsphase aufgebracht werden muß, ist wesentlich niedriger als die zum Aufbrechen des Palatinalspaltes benötigte Kraft, sie beträgt nur ungefähr 0,5kp bis 0,8kp. Das schrittweise Nachstellen ist erforderlich, damit die nach der Grünholz-Fraktur zur Einwirkung kommende Dehnkraft nicht zu groß wird. Die augenblickliche Dehnkraft kann vom Kieferorthopäden nur grob abgeschätzt werden, er benötigt viel Fingerspitzengefühl dafür. Die Dehnkraft erreicht mit jeder Nachstellung ein Maximum und fällt im Verlauf der dadurch verursachten Dehnung des Palatinalspaltes wieder ab, so daß der Palatinalspalt nicht gleichmäßig gedehnt wird. Je gleichmäßiger und rascher man den Palatinalspalt öffnen will, desto häufiger muß man den Kieferorthopäden aufsuchen, damit dieser in möglichst kleinen Schritten die Palatinalsplitschraube nachstellt.

Der vorliegenden Erfindung liegt die **Aufgabe** zugrunde, einen Weg aufzuzeigen, wie das Arbeiten mit Palatinalsplitschrauben erleichtert werden kann, wobei die Wunschvorstellung besteht, die Palatinalsplitschraube einerseits nicht so häufig nachstellen zu müssen, andererseits aber auch keine Schubspannungsspitzen an den Zähnen zu riskieren.

Diese Aufgabe wird gelöst durch eine Palatinalsplitschraube mit den im Anspruch 1 oder Anspruch 2 angegebenen Merkmalen. Vorteilhafte Weiterbildungen der Erfindung sind Gegenstand der abhängigen Ansprüche.

Die im Anspruch 1 angegebene erfindungsgemäße Palatinalsplitschraube hat wie bekannte Palatinalsplitschrauben zwei gerade geführte Körper, deren Abstand durch eine Doppelspindel verändert werden kann. Im Gegensatz zum Stand der Technik greifen die Gewindeteile der Spindel jedoch nicht direkt in eine Gewindebohrung der beiden Körper ein, sondern in zwei besondere Gewindehülsen, welche auf die Gewindeteile der Spindel gedreht sind. Die Gewindehülsen sind in einer Ausnehmung des jeweiligen Körpers angeordnet, welche einen Anschlag für das vordere, vom Betätigungsteil (Kopf) der Spindel entfernte Ende der Gewindehülsen hat. Darüberhinaus sind die Gewindehülsen von einer Wendelfeder umgeben, welche sich mit ihrem einen Ende an dem genannten Anschlag und mit ihrem anderen Ende an einem Widerlager abstützt, welches am hinteren Ende der Gewindehülsen ausgebildet ist. Als das hintere Ende der Gewindehülsen wird jenes Ende bezeichnet, welches dem Kopf der Spindel benachbart ist. Dieses Widerlager ist vorzugsweise ein an den Gewindehülsen vorgesehener Kragen, könnte aber auch durch einzelne radiale Vorsprünge gebildet sein. Der Anschlag für die Wendelfeder und für das vordere Ende der Spindel kann die stehengebliebene Endwand sein, welche die Ausnehmung, z.B. ein Sackloch, in dem jeweiligen Körper begrenzt. Die Ausnehmung könnte auch dadurch gebildet sein, daß der Körper zentrisch durchbohrt und nachträglich durch einen Deckel wieder verschlossen ist. Eine andere Möglichkeit, einen Anschlag für das vordere Ende der Wendelfeder und/oder der Spindel zu bilden, besteht darin, als Ausnehmung im Körper eine abgestufte Bohrung vorzusehen, wobei der Anschlag durch die Stufe zwischen dem weiteren und dem engeren Teil der Bohrung gebildet ist.

Die Wendelfedern, welche in der erfindungsgemäßen Palatinalsplitschraube verwendet werden, sind so auszulegen, daß ihre Rückstellkraft nicht ausreicht, um die Grünholz-Fraktur zu erreichen, d.h., den Palatinalspalt zu öffnen; ihre Rückstellkraft hat jedoch auszureichen, um einen bereits geöffneten Palatinalspalt zu erweitern.

Die neue Palatinalsplitschraube ermöglicht durch ihren Aufbau einen neuartigen und fortschrittlichen Behandlungsablauf beim Öffnen und Erweitern des Palatinalspaltes: Zu diesem Zweck wird sie wie eine herkömmliche Palatinalsplitschraube eingebaut. Zum Öffnen des Palatinalspaltes wird die Spindel gedreht und treibt die beiden Körper der Schraube auseinander, indem sie unmittelbar, durch eine in Verschieberichtung starre Kopplung, auf die Anschläge in den Ausnehmungen der beiden Körper einwirkt. Kommt es bei einer Dehnung von z.B. 4mm zum Aufbrechen des Palatinalspaltes (Grünholz-Fraktur), dann übernehmen danach die Federn die weitergehende Verbreiterung des Palatinalspaltes. Durch den dabei wirksam werdenden Federweg, der mit dem Entspannen der Federn einhergeht, kommt es nicht so rasch zu einem Abfallen der Spannkraft, so daß die Verbreiterung des Palatinalspaltes bis zum Erreichen einer Stabilisierungsphase ohne zusätzliche Behandlungsschritte erfolgen kann. Die Behandlungsdauer kann noch weiter verkürzt werden, weil die Federn die beiden Körper der Schraube und mit ihnen die Sutura Palatina ausdauernder und gleichmäßiger auseinanderschieben, als das mit einer bekannten Palatinalsplitschraube möglich ist, welche ausschließlich eine starre Kopplung zwischen der Spindel und den beiden Körpern hat.

Besonders vorteilhaft ist die Erfindung, wenn als Wendelfedern nicht herkömmliche Stahlfedern verwendet werden, sondern Federn aus einer Formgedächtnislegierung, die unter den im Mund vorherrschenden Temperaturen pseudoelastisch ist. Bevorzugte Formgedächtnislegierungen sind Legierungen auf der Basis von Nickel und Titan, welche Nickel und Titan in ungefähr gleichen Atomprozenten enthalten. Solche Legierungen können - abhängig von der gewählten Temperatur - entweder in austenitischem oder in martensitischem Zustand vorliegen. Martensit liegt bei niedrigerer Temperatur, Austenit bei höherer Temperatur vor. Die Temperatur, bei welcher sich die Legierung beim Abkühlen von Austenit in Martensit umzuwandeln beginnt, bezeichnet man als den Ms-Punkt. Im martensitischen Zustand unterhalb des Ms-Punktes können solche Legierungen Formgedächtnis zeigen: Eine im martensitischen Zustand erfolgte plastische Verformung kann durch Erwärmen auf Temperaturen oberhalb des Ms-Punktes wieder rückgängig gemacht werden. In einem an den Ms-Punkt nach oben anschließenden Temperaturbereich kann eine solche Formgedächtnislegierung pseudoelastisches Verhalten zeigen. Das peusoelastische Verhalten ist dadurch gekennzeichnet, daß der Kraftbedarf für eine zunehmende Dehnung zwar zunächst, wie bei einem Austenit erwartet, deutlich ansteigt, dann jedoch nach Erreichen von ungefähr 1% bis 2% Dehnung mit weiter fortschreitender Dehnung nur noch geringfügig zunimmt und erst nach Erreichen größerer Dehnungen von 6% bis 8% wieder steil ansteigt. Der mittlere Dehnungsbereich wird als das "Martensit-Plateau" bezeichnet. Der Name stammt daher, daß sich in der Legierung unter der Einwirkung der Zugspannung Martensit bildet. Wird das Material vom Zug entlastet, kehrt es in den austenitischen Zustand zurück. Diese pseudoelastischen Dehnungen sind in hohem Ausmaß, bis zu Dehnungen von über 6% bis 8%, reversibel. Die Pseudoelastizität gehorcht wegen des ausgeprägten Martensit-Plateaus dem Hooke'schen Gesetz nicht. Das macht Federn, die sich auf diese Weise pseudoelastisch verhalten, für Zwecke der vorliegenden Erfindung besonders geeignet, denn bei Federwegen im Bereich des Martensit-Plateaus ist die Rückstellkraft der Feder nahezu unabhängig vom Federweg.

Eine Palatinalsplitschraube gemäß der Erfindung hat deshalb den großen Vorteil, daß der von der Feder auf die Zähne ausgeübte Druck während der Dauer der Behandlung der Erweiterung des Palatinalspaltes nahezu unverändert bleibt. Wegen des gleichbleibenden Drucks wird der Palatinalspalt schneller erweitert als bisher, wobei ein Nachstellen der Palatinalschraube nicht so häufig wie beim Stand der Technik oder überhaupt nicht nötig ist. Da sich die Federkraft, solange man sich auf dem Martensit-Plateau bewegt, kaum ändert, kann unter Anwendung der Erfindung obendrein zuverlässig verhindert werden, daß ein behandelnder Kieferorthopäde versehentlich zu starke Kräfte einstellt, denn durch einfaches Abstimmen des Federweges auf die Dehnspanne der Palatinalsplitschraube kann verhindert werden, daß eine über das Martensit-Plateau hinausgehende Verstellung stattfindet und deshalb ist bei der erfindungsgemäßen Palatinalsplitschraube die Spannkraft im wesentlichen durch die Wahl der pseudoelastischen Feder bestimmt, aber nicht durch den Verstellweg der Spindel.
Komfort und Sicherheit der Anwendung der Palatinalsplitschraube werden durch die Erfindung wesentlich erhöht. Es ist sogar möglich, die Behandlung bis zur Stabilisierungsphase in einem einzigen Schritt ohne Nachstellung durchzuführen, weil die Dehnung mit optimaler Kraft über einen viel größeren Federweg als bei einer Hooke'schen Feder möglich ist.

Pseudoelastische Federn sind zwar an sich bereits bekannt, wurden aber in Palatinalsplitschrauben für orthodontische Zwecke bislang nicht benutzt; die erfindungsgemäße Verwendung von Dehnschrauben mit eingebauten Druckfedern für das Öffnen und Verbreitern des Palatinalspaltes ist überhaupt ganz und gar neu. Die neuen Palatinalsplitschrauben vermeiden schädliche Druckspitzen und machen mit dem bei herkömmlichen Palatinalsplitschrauben erforderlichen häufigen Nachstellen ein für alle Mal Schluß.

Die Lösung gemäß Anspruch 2 verwendet anstelle einer Doppelspindel lediglich eine einfache Spindel mit einem Betätigungsteil (Kopf) und mit einem einzigen davon ausgehenden Gewindeteil, auf welches eine Gewindehülse gedreht ist, welche sich in einem der beiden Körper befindet. Der Kopf der Spindel kann sich wie Fall des Patentanspruchs 1 zwischen den beiden Körpern befinden, entweder freiliegend oder ganz oder teilweise in einer Ausnehmung angeordnet, welche in einem der Körper oder aufgeteilt in beiden Körpern vorhanden ist. Eine Palatinalsplitschraube mit einer einfachen Spindel ist grundsätzlich ebenso einsetzbar wie eine mit einer Doppelspindel. Die Ausführungsform mit einer Doppelspindel ermöglicht jedoch größere Verstellwege und größere Federwege sowie einen symmetrischen Aufbau und ist deshalb bevorzugt.
Während bei der bekannten Palatinalsplitschraube deren beide Körper unmittelbar durch die Doppelspindel zusammengehalten werden, weil diese in Gewindebohrungen der beiden Körper eingedreht ist, werden bei den erfindungsgemäßen Palatinalsplitschrauben deren Teile am besten mittels der Geradführungsmittel zusammengehalten, welche mit den beiden Körpern im Eingriff stehen und sie beim Verändern ihres Abstands geradeführen. Die Geradführungsmittel sind vorzugsweise Stifte, welche sich durch Bohrungen der beiden Körper hindurch erstrecken und an ihren Enden Widerlager haben, die zur Begrenzung der Ausdehnung der Palatinalsplitschraube mit Anschlägen zusammenwirken, die an den Körpern oder in deren Bohrungen ausgebildet sind. Auf diese Weise können die Körper von den Stiften nicht herabgleiten. Die Widerlager an den Enden der Stifte können durch einen Kopf gebildet sein oder durch eine irgendwie geartete Verdickung, z.B. durch Stauchen der Stifte an ihren Enden, nachdem die Körper auf die Stifte geschoben worden sind. Als Anschläge an den Körpern können die Außenseitenbereiche um deren Bohrungen herum dienen, aber auch Anschläge, die in den Bohrungen ausgebildet sind, insbesondere dadurch, daß die Bohrungen abgestuft ausgebildet sind, so daß die Enden der Stifte, wenn sie an den Anschlägen anschlagen, in den Bohrungen versenkt angeordnet sind.

Die Länge der Spindel und der Gewindehülsen und die Lage des Anschlages für die Spindel in den Körpern sind vorzugsweise so aufeinander abgestimmt, daß in jeder Stellung der Gewindehülsen auf der Spindel diese durch Druck auf die beiden Körper am dafür vorgesehenen Anschlag anschlagen können. Das macht es möglich, daß die Gewindehülsen mit ihren vorderen Enden bereits dann an den dafür vorgesehenen Anschlägen liegen, wenn die beiden Körper der Palatinalsplitschraube ihren geringstmöglichen Abstand einnehmen, in welchem die Spindel so tief wie möglich in die Gewindehülsen geschraubt ist und die beiden Körper so weit wie möglich zusammengedrückt sind. Die Behandlung zur Öffnung und Verbreiterung des Palatinalspaltes beginnt aus dieser engsten Stellung der Palatinalsplitschraube heraus, und das geschieht dann mit voller Kraft, weil die Drehung der Spindel direkt die beiden Körper auseinandertreibt und zu diesem Zweck nicht erst einen Federweg der Wendelfedern überwinden muß.

Um die Palatinalsplitschraube feststellen zu können, müssen die Gewindehülsen in den Ausnehmungen der Körper gegen Verdrehen gesichert sein. Dazu kann es genügen, daß die von der Federspannung am Widerlager der Gewindehülse erzeugte Reibung und/oder die durch das Anschlagen des vorderen Endes der Gewindehülse am Boden der Ausnehmung in dem jeweiligen Körper erzeugte Reibung ein Mitdrehen der Gewindehülse mit der sich drehenden Spindel hemmt. Günstiger ist es jedoch, wenn die Gewindehülsen statt durch einen Kraftschluß durch einen Formschluß daran gehindert werden, sich zu drehen. Das hat den Vorteil, daß der behandelnde Kieferorthopäde eine eindeutige Zuordnung zwischen der Umdrehungszahl der Spindel und dem Verschiebeweg der Gewindehülse hat. Ein solcher Formschluß könnte zwischen dem Widerlager jeder Gewindehülse und dem Körper hergestellt werden, in dessen Ausnehmung sie steckt. Vorzugsweise wird jedoch ein formschlüssiger Eingriff zwischen dem Widerlager jeder Gewindehülse und mindestens einem der Geradführungsmittel (Stifte) hergestellt. Diese bevorzugte Ausbildung hat den Vorteil, daß der Formschluß über den gesamten Verschiebeweg erhalten bleibt.

Ausführungsbeispiele der Erfindung sind in den beigefügten Zeichnungen dargestellt und werden nachfolgend beschrieben.
- Figur 1: zeigt eine Palatinalsplitschraube in einer längsgeschnittenen Ansicht, wobei die beiden Körper der Palatinalsplitschraube den geringst möglichen Abstand voneinander haben,
- Figur 2: zeigt die Palatinalsplitschraube aus Figur 1 mit Gewindehülsen, die sich in ihrer größtmöglichen Entfernung voneinander befinden, mit zusammengedrückten Wendelfedern,
- Figur 3: zeigt dieselbe Palatinalsplitschraube mit den Gewindehülsen in der Stellung wie in Figur 2, aber mit maximal voneinander entfernten Körpern,
- Figur 4: zeigt die Palatinalsplitschraube aus Figur 1 in Einbaulage am Oberkiefer,
- Figur 5: zeigt die Palatinalsplitschraube in der Einbaulage aus Figur 4, jedoch im Vertikalschnitt durch den Oberkiefer,
- Figur 6: zeigt die Palatinalsplitschraube aus Figur 2 in Einbaulage wie in Figur 4, beim Auftreten der Grünholz-Fraktur,
- Figur 7: zeigt die Palatinalsplitschraube in der Einbaulage gemäß Figur 6, jedoch im Vertikalschnitt durch den Oberkiefer,
- Figur 8: zeigt die Palatinalsplitschraube in einer Stellung entsprechend der Figur 3, in Einbaulage im Oberkiefer, bei Erreichen der Stabilitätsphase des Palatinalspaltes,
- Figur 9: zeigt die Palatinalsplitschraube in der Einbaulage wie in Figur 8, jedoch im Vertikalschnitt durch den Oberkiefer,
- Figur 10: zeigt in einer Darstellung entsprechend der Figur 3 zum Vergleich nebeneinander drei Palatinalsplitschrauben mit gleich langen Führungsstiften, die sich darin unterscheiden, daß die beiden Körper in ihren Bohrungen an unterschiedlichen Stellen Anschläge für die Enden der Führungsstifte haben, wodurch sich unterschiedliche maximale Dehnungen ergeben,und
- Figur 11: zeigt ein typisches Zug-Dehnungs-Diagramm für einen pseudoelastischen Draht.

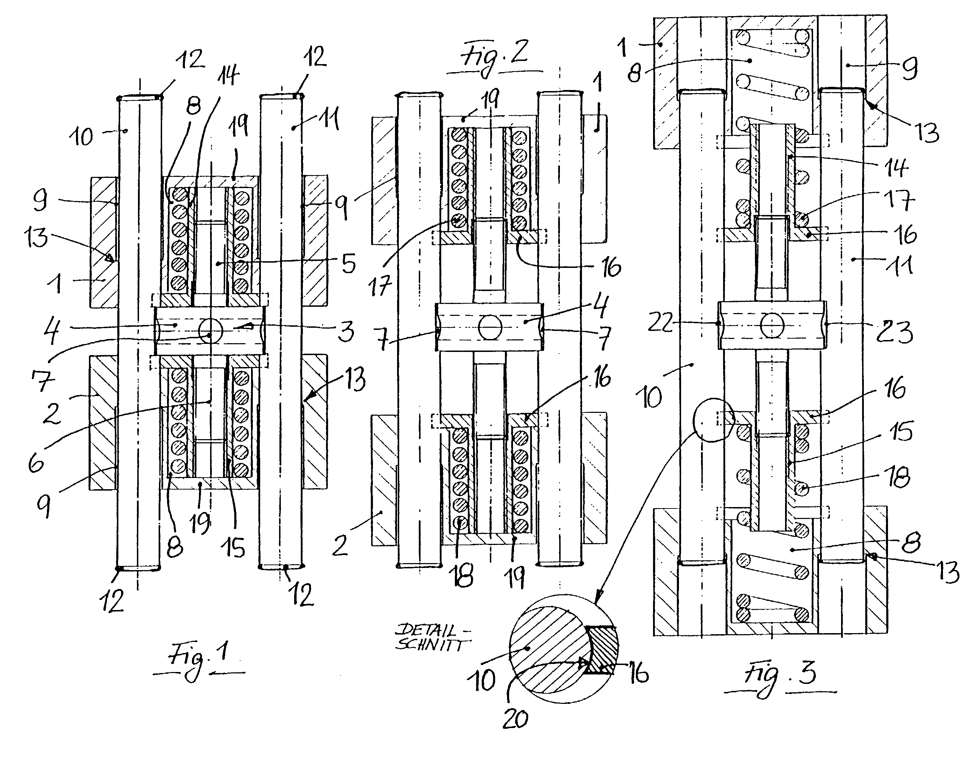

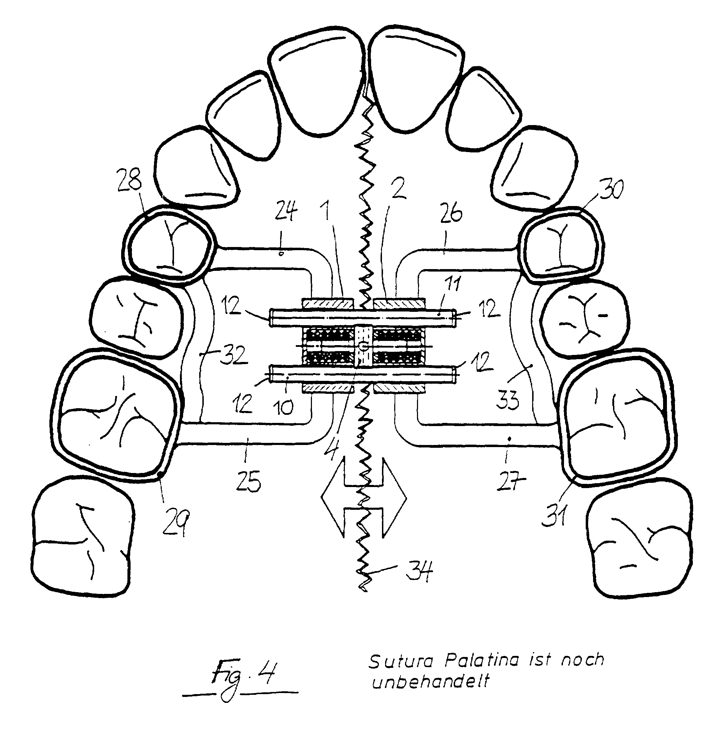

Die in den Figuren 1 bis 3 dargestellte Palatinalsplitschraube hat zwei in ihrem gegenseitigen Abstand veränderbare, ungefähr quaderförmige Körper 1 und 2, welche durch eine Spindel 3 verstellt werden können. Die Spindel ist eine Doppelspindel mit einem zentralen Betätigungsteil 4 und zwei von diesem in entgegengesetzte Richtungen ausgehenden Gewindeteilen 5 und 6 mit entgegengesetztem Windungssinn. Das Betätigungsteil 4 ist in zwei zueinander senkrechten Richtungen durchbohrt; in die Bohrungen 7 kann man einen Stift stecken, um mit ihm die Spindel 3 zu drehen.

Die beiden gleich ausgebildeten Körper 1 und 2 haben eine zentrale Ausnehmung 8 in Gestalt eines zylindrischen Sackloches und zu beiden Seiten der Ausnehmung 8 durchgehende Bohrungen 9, in welchen als Mittel zur Verbindung und Geradführung der Körper 1 und 2 zwei zylindrische Stifte 10 und 11 stecken, welche durch Stauchen verdickte Enden 12 haben. Die Bohrungen 9 haben einen geringeren Durchmesser als die Ausnehmung 8. Die Längsachsen der Bohrungen 9 und der Ausnehmungen 8 liegen in einer gemeinsamen Ebene.

Die Bohrungen 9 sind abgestuft ausgebildet; eine zwischen ihrem engeren, inneren Abschnitt und ihrem weiteren, äußeren Abschnitt liegende Stufe 13 dient als Anschlag für die gestauchten Enden 12 der Stifte 10 und 11 und begrenzt den größten Abstand, den die beiden Körper 1 und 2 voneinander einnehmen können.

Auf die Gewindeteile 5 und 6 der Spindel ist jeweils eine Gewindehülse 14 bzw. 15 gedreht, welche an ihrem dem Betätigungsteil 4 benachbarten Ende als Widerlager einen Kragen 16 hat. Die Gewindehülsen 14 und 15 sind von einer Wendelfeder 17 bis 18 umgeben, welche aus einem pseudoelastischen Werkstoff besteht. Die Gewindehülsen 14 und 15 erstrecken sich mit den Wendelfedern 17 und 18 in die Ausnehmungen 8 hinein. Die Gewindehülsen 14 und 15, die Wendelfedern 17 und 18 und die Ausnehmungen 8 sind mit ihren Durchmessern so aufeinander abgestimmt, daß die Wendelfedern mit etwas Spiel im Ringraum zwischen den Gewindehülsen 14 und 15 und der Umfangswand der Ausnehmungen 8 arbeiten können. Die Wendelfedern sind zwischen dem Kragen 16 und dem gegenüberliegenden Boden 19 der jeweiligen Ausnehmung 8 eingespannt.

Der Kragen 16 erstreckt sich über den Rand der Ausnehmung 8 hinaus bis in den Bereich der beiden Stifte 10 und 11 und hat zwei diametral angeordnete Ausnehmungen 20 und 21 in Gestalt eines Kreisabschnittes, welche die beiden Stifte 10 und 11 teilweise umgreifen und auf diese Weise die Gewindehülsen 14 und 15 gegen ein Verdrehen sichern.

Ferner haben die Stifte 10 und 11 in der Mitte jeweils einen Einschnitt 22 bzw. 23. In die beiden einander zugewandten Einschnitte 22 und 23 greift das Betätigungsteil 4 der Spindel ein und zentriert diese.

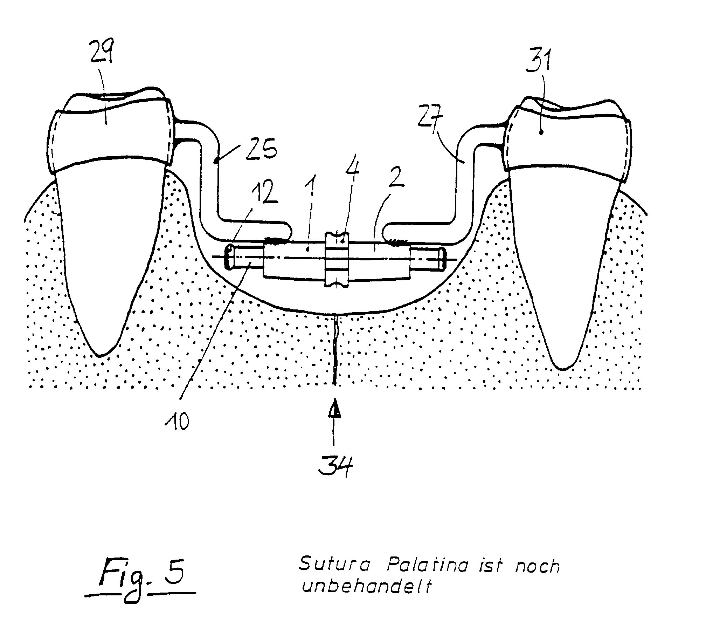

Die Figuren 1 bis 3 zeigen die Palatinalsplitschraube in drei verschiedenen Stellungen. In Figur 1 sind die Gewindeteile 5 und 6 der Spindel maximal in die Gewindehülsen 14 und 15 geschraubt; die Kragen 16 liegen am Betätigungsteil 4 an. Mit ihrem vorderen, vom Kragen 16 entfernten Ende haben die Gewindehülsen 14 und 15 am Boden 19 der Körper 1 und 2 angeschlagen, wodurch die Wendelfedern 17 und 18 soweit wie möglich zusammengedrückt sind. Diese Stellung ist nur möglich, wenn auf die Körper 1 und 2 von außen her Druck ausgeübt wird, der ihren Abstand verringert, bis sie am vorderen Ende der Gewindehülsen 14 und 15 anschlagen. Dies ist der Fall bei der in den Figuren 4 und 5 dargestellten Einbaulage der Palatinalsplitschraube am Oberkiefer. Zu diesem Zweck sind am Körper 1 zwei Arme 24 und 25 und am Körper 2 zwei Arme 26 und 27 angeschweißt, welche paarweise integraler Bestandteil eines Bügels sein können. Die von den Körpern 1 und 2 abgewandten Enden der Arme sind an Edelstahlbändern 28, 29, 30 und 31 angeschweißt, welche vier Backenzähne (Molaren) umgeben und zur Versteifung der Apparatur zusätzlich durch zwei Stege 32 und 33 verbunden sind.

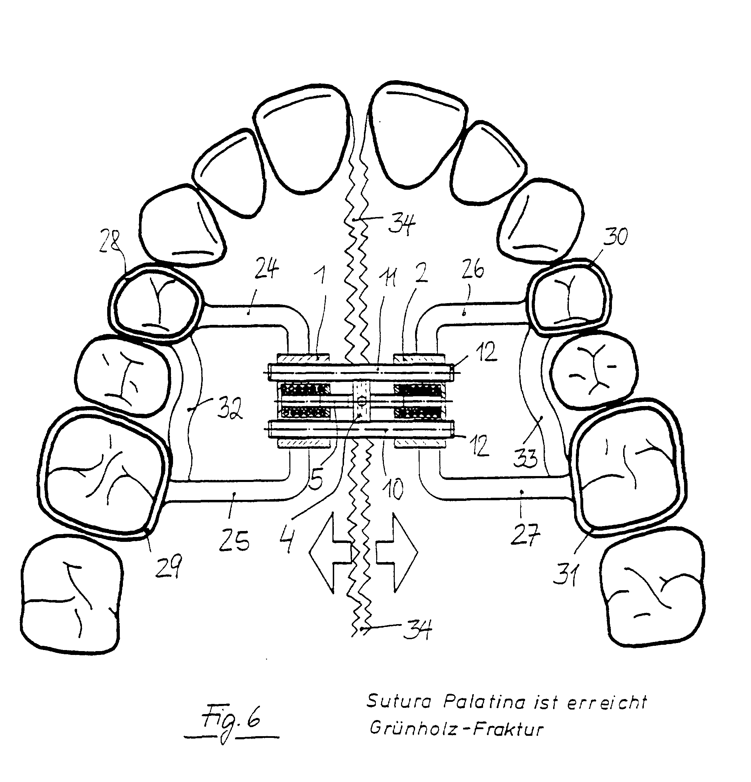

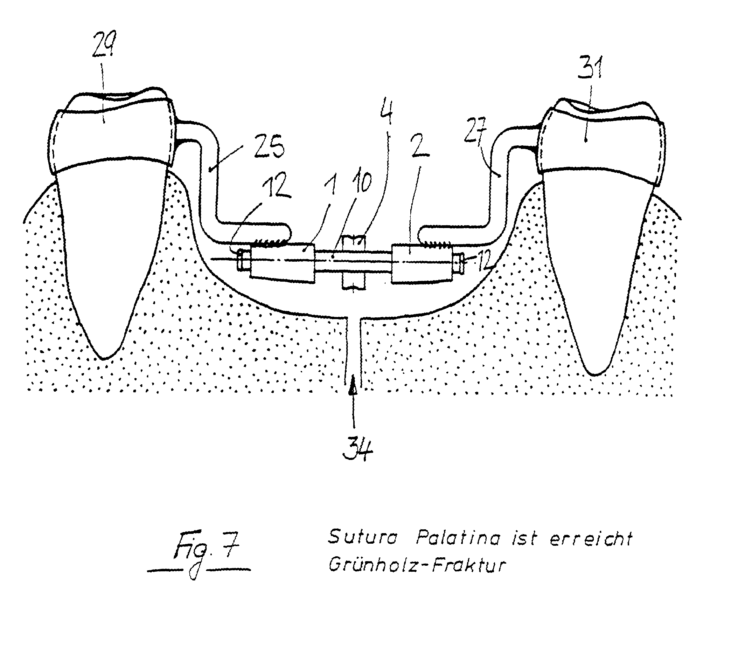

Die Apparatur überbrückt den in der Mitte des Oberkiefers verlaufenden Palatinalspalt 34 und soll ihn öffnen. Die Figuren 4 und 5 zeigen den Ausgangspunkt der Behandlung: Der Palatinalspalt 34 ist noch geschlossen, die Palatinalsplitschraube befindet sich in ihrer Ausgangsstellung gemäß Figur 1, in welcher die Körper 1 und 2 den geringstmöglichen Abstand einnehmen. Der Druck der Wendelfedern 17 und 18, welche den Abstand zwischen den Körpern 1 und 2 zu vergrößern suchen, wird von den Molaren aufgefangen, an denen die Arme 24 bis 27 befestigt sind, und wird von den Molaren in die Palatina eingeleitet. Die von den Wendelfedern 17 und 18 ausgeübte Druckkraft reicht nicht aus, um den Palatinalspalt 34 zu öffnen. Das erreicht man vielmehr dadurch, daß man die Spindel 3 verstellt; dabei drücken die Gewindehülsen 14 und 15 mit ihrem vorderen Ende gegen den Boden 19 der Körper 1 und 2 und treiben sie infolge der vorhandenen starren Ankopplung der Spindel an die Körper zwangsweise auseinander. Die Spindel wird solange gedreht, bis der Palatinalspalt 34 aufbricht, was nach einem Verstellweg von typisch 4 mm bis 6 mm der Fall ist. Der Zustand unmittelbar nach dem Aufbrechen des Palatinalspaltes 34 ist in den Figuren 6 und 7 dargestellt: Die beiden Körper 1 und 2 haben sich um die besagten 4 bis 6 mm voneinander entfernt, die vorderen Enden der Gewindehülsen 14 und 15 liegen noch immer am Boden 9 der Körper 1 und 2 an, die beiden Wendelfedern 17 und 18 sind maximal gespannt. Dieser Zustand der Palatinalsplitschraube ist vergrößert in Figur 2 dargestellt.

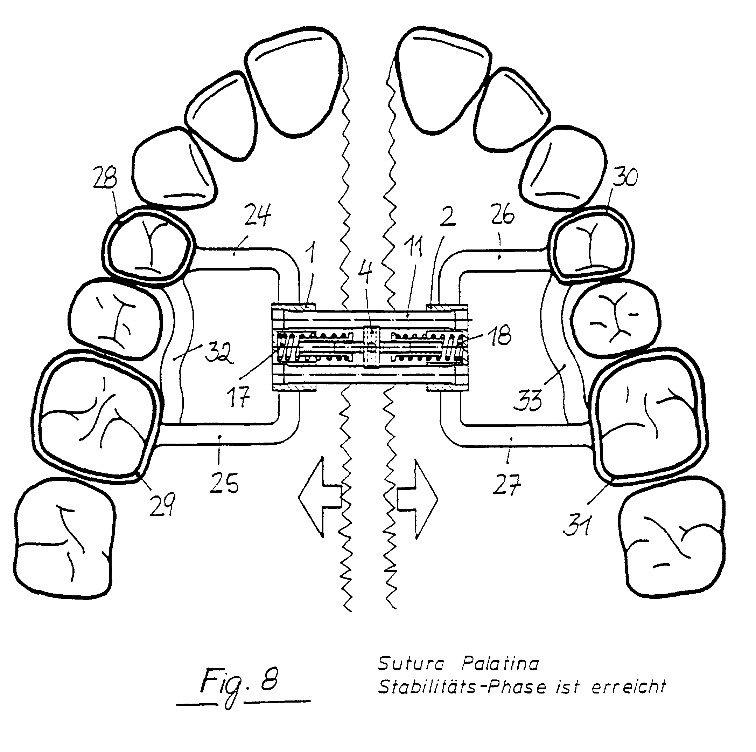

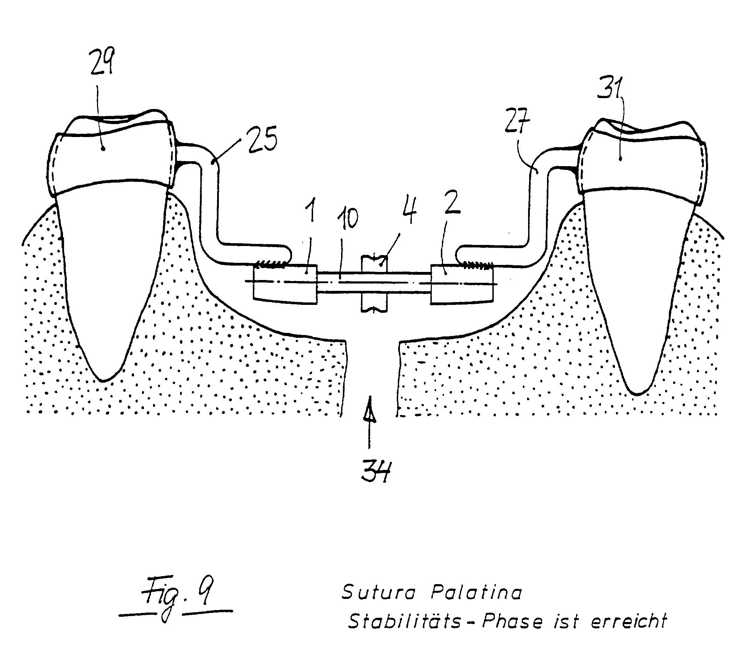

Die weitere Verbreiterung des Palatinalspaltes 34 nach dem Auftreten der Grünholz-Fraktur übernehmen die Wendelfedern 17 und 18, deren Rückstellkraft zwar nicht ausreicht, um den Palatinalspalt 34 aufzubrechen, wohl aber ausreicht, um den aufgebrochenen Palatinalspalt zu verbreitern. Das kann ohne weitere Verstellung der Spindel 3 geschehen, allein durch die Ausdehnung der Wendelfedern 17 und 18. Das Ende der Behandlung ist erreicht, wenn die gestauchten Enden 12 der Stifte 10 und 11 an den Stufen 13 in den Bohrungen 9 anschlagen. Dieser Zustand ist in den Figuren 8 und 9 dargestellt. Die bis dahin erfolgte Dehnung der Palatinalsplitschraube bestimmt die Erweiterung des Palatinalspaltes 34 und wird vom behandelnden Kieferorthopäden vorgegeben. Sollte die Länge des Martensitplateaus der Wendelfedern 17 und 18 dafür im Einzelfall nicht ausreichen, könnten die Wendelfedern 17 und 18 während der Erweiterung des Palatinalspaltes durch Verdrehen der Spindel 3 auch nachgespannt werden.

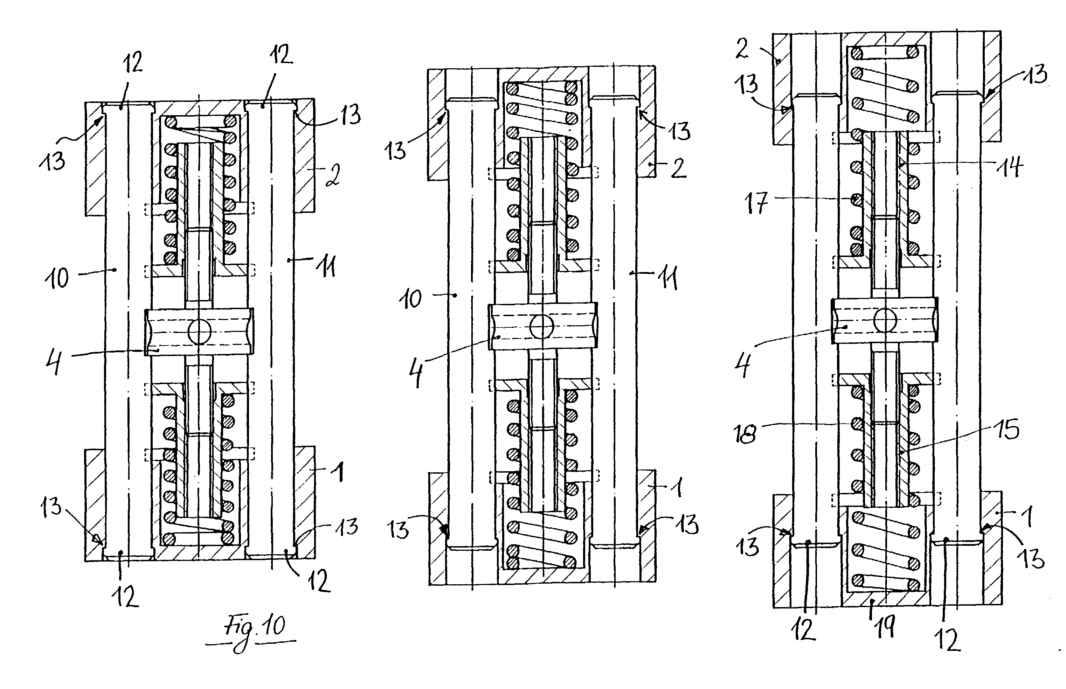

In der kieferorthopädischen Praxis sind Palatinalspalte in unterschiedlichem Ausmaß zu erweitern. Um das zu ermöglichen, kann man dem Kieferorthopäden einen Satz von Palatinalsplitschrauben zur Verfügung stellen, die sich in der Länge der Stifte 10 und 11 unterscheiden. Eine andere Möglichkeit besteht darin, dem Kieferorthopäden einen Satz von Palatinalsplitschrauben zur Verfügung zu stellen, die sich nicht in der Länge der Stifte unterscheiden, sondern in der Lage der als Anschlag für die Enden 12 der Stifte dienenden Stufe 13 in den Bohrungen 9, wodurch sich ebenfalls unterschiedliche Verbreiterungen erzielen lassen, wie der Vergleich in Figur 10 veranschaulicht. Die beiden Maßnahmen können auch miteinander kombiniert werden.

Die dargestellten Palatinalsplitschrauben können in der Weise abgewandelt werden, daß anstelle einer Doppelspindel 3 eine einfache Spindel verwendet wird, z. B. durch Entfernen des Gewindeteils 6. Tut man das, benötigt man auch die eine Anordnung aus Gewindehülse 15 und Wendelfeder 18 nicht mehr, auch nicht die eine Ausnehmung 8, wodurch der Aufbau der Palatinalsplitschraube vereinfacht, zugleich aber auch die mögliche Dehnung verkürzt wird.

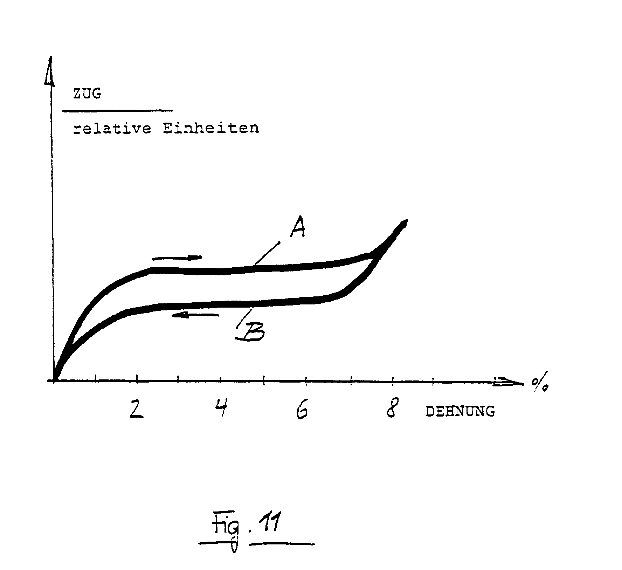

Figur 11 zeigt ein typisches Zug-Dehnungs-Diagramm für einen pseudoelastischen Nickel-Titan-Draht und für eine daraus gewickelte Wendelfeder 17, 18. Wird ein pseudoelastischer Draht durch Zug gedehnt, so benötigt man zunächst eine mäßig steil ansteigende Zugkraft, um ihn fortschreitend zu dehnen. Ab einer Dehnung von ungefähr 2 % wächst die für eine fortschreitende Dehnung erforderliche Zugkraft nur noch sehr geringfügig an, bis sie bei etwa 8 % Dehnung wieder stärker zu steigen beginnt (oberer Zweig A der Kurve). Entlastet man danach den Draht, so bildet sich die Dehnung längs des unteren Zweiges B der Kurve zurück: Die Erscheinung zeigt eine Hysterese. Der flach verlaufende Teil der Kennlinie, im dargestellten Beispiel zwischen 2 % und 8 %., das so genannte Martensit-Plateau, wird für Zwecke der Erfindung ausgenützt. Der für eine Kieferkorrektur weniger wirksame Anstiegsbereich der Kurve zwischen 0% und etwa 2 % Dehnung wird dadurch ausgeschaltet, daß man die Federn 17, 18 mit einer entsprechenden Vorspannung in die Ausnehmungen 8 einbaut.

## Patentansprüche

1. Dehnschraube mit zwei Körpern (1, 2), deren gegenseitiger Abstand mittels einer Spindel (3) veränderbar ist, die einen zwischen den Körpern (1, 2) angeordneten Betätigungsteil (4) und davon ausgehend zwei Gewindeteile (5, 6) mit entgegengesetztem Windungssinn hat, welche in Innengewinde eingreifen, welche in den Körpern (1,2) angeordnet sind,
wobei die Innengewinde an zwei Gewindehülsen (14,15) ausgebildet sind, welche auf die Gewindeteile (5, 6) der Spindel (3) gedreht sind,
und wobei die Gewindehülsen (14, 15) in einer Ausnehmung (8) des jeweiligen Körpers (1, 2) angeordnet und jeweils von einer Wendelfeder (17, 18) umgeben sind, welche sich mit ihrem einen Ende an einem Anschlag (19) in der Ausnehmung (8) und mit ihrem anderen Ende an einem Widerlager (16) abstützt, welches an dem hinteren, dem Betätigungsteil (4) benachbarten Ende der Gewindehülsen (14, 15) ausgebildet ist,
und mit Geradführungsmitteln (10, 11), welche mit beiden Körpern (1, 2) in Eingriff stehen und sie unter Vermeidung einer Relativdrehung beim Verändern ihres Abstands gerade führen,
**dadurch gekennzeichnet, daß** die Dehnschraube zu einer Palatinalsplitschraube weitergebildet ist und zu diesem Zweck an den Körpern (1, 2) Retentionsarme (24-27) angebracht sind und daß der Anschlag (19) des jeweiligen Körpers (1, 2) einen Anschlag für das vordere, vom Betätigungsteil (4) entfernte Ende der Gewindehülsen (14, 15) bildet.

2. Dehnschraube mit zwei Körpern (1,2), deren gegenseitiger Abstand mittels einer Spindel (3) veränderbar ist, die einen zwischen den Körpern (1,2) angeordneten Betätigungsteil (4) und davon ausgehend ein Gewindeteil (5) hat, welches in ein Innengewinde eingreift, welches in einem der Körper (1,2) angeordnet ist,
wobei das Innengewinde an einer Gewindehülse (14) ausgebildet ist, welche auf das Gewindeteil (5) der Spindel (3) gedreht ist,
und wobei die Gewindehülse (14) in einer Ausnehmung (8) des betreffenden Körpers (1) angeordnet und von einer Wendelfeder (17) umgeben ist, welche sich mit ihrem einen Ende an einem Anschlag (19) in der Ausnehmung (8) und mit ihrem anderen Ende an einem Widerlager (16) abstützt, welches an dem hinteren, dem Betätigungsteil (4) benachbarten Ende der Gewindehülse (14) ausgebildet ist,
und mit Geradführungsmitteln (10, 11), welche mit beiden Körpem (1, 2) in Eingriff stehen und sie unter Vermeidung einer Relativdrehung beim Verändern ihres Abstands gerade führen,
**dadurch gekennzeichnet, daß** die Dehnschraube zu einer Palatinalsplitschraube weitergebildet ist und zu diesem Zweck an den Körpern (1, 2) Retentionsarme (24-27) angebracht sind und daß der Anschlag (19) des betreffenden Körpers (1) einen Anschlag für das vordere, vom Betätigungsteil (4) entfernte Ende der Gewindehülse (14) bildet.

3. Palatinalsplitschraube nach Anspruch 1 oder 2, **dadurch gekennzeichnet, daß** die Länge der Spindel (3) und der Gewindehülsen (14,15) und die Lage des Anschlages (19) in den Körpern (1,2) so aufeinander abgestimmt sind, daß in jeder Stellung der Gewindehülsen (14,15) auf der Spindel (3) diese durch Druck auf die beiden Körper (1,2) am Anschlag (19) anschlagen können.

4. Palatinalsplitschraube nach einem der vorstehenden Ansprüche, **dadurch gekennzeichnet, daß** mindestens eines der Geradführungsmittel (10, 11) mit dem bzw. den Widerlagern (16) in formschlüssigem Eingriff stehen.

5. Palatinalsplitschraube nach einem der vorstehenden Ansprüche, **dadurch gekennzeichnet, daß** die Federn (17,18) aus einer Formgedächtnislegierung bestehen, die unter den im Mund vorherrschenden Temperaturen pseudoelastisch ist.

6. Palatinalsplitschraube nach Anspruch 5, **dadurch gekennzeichnet, daß** die Federn (17,18) aus einer Legierung auf der Basis von Nickel und Titan bestehen, in welcher Nickel und Titan in ungefähr gleichen Atomprozenten enthalten sind.

7. Palatinalsplitschraube nach einem der vorstehenden Ansprüche, **dadurch gekennzeichnet, daß** die Geradführungsmittel (10,11) Stifte sind, welche sich durch Bohrungen (9) der Körper (1,2) hindurch erstrecken und an ihren Enden (12) Widerlager haben, die zur Begrenzung der Ausdehnung der Palatinalsplitschraube mit Anschlägen (13) zusammenwirken, die an den Körpern (1, 2) oder in deren Bohrungen (9) ausgebildet sind.

8. Palatinalsplitschraube nach Anspruch 7, **dadurch gekennzeichnet, daß** die Bohrungen (9) zur Bildung von Anschlägen (13) abgestuft ausgebildet sind.

## Claims

1. Expansion screw having two bodies (1, 2) whose spacing can be varied by means of a spindle (3), which latter comprises an actuating element (4) situated between said bodies (1, 2) and, extending therefrom, two threaded elements (5, 6) with opposite winding directions which engage in internal threads arranged in said bodies (1, 2), said internal threads are formed on two threaded bushes (14, 15), that are screwed upon said threaded elements (5, 6) of said spindle (3), that said threaded bushes (14, 15) are arranged in a recess (8) of the respective body (1, 2) and are each surrounded by a spiral spring (17, 18) which takes its bearing at one end upon an end stop (19) in the recess (8) and at its other end upon an abutment (16) formed at the back end of said threaded bushes (14, 15) neighboring said actuating element (4),
having linear guiding means (10, 11) that engage said two bodies (1, 2) and guide them linearly during variation of their spacing, while avoiding any relative rotation,
**characterized in that** the expansion screw is modified into a palatal split screw having for this purpose retaining arms (24 to 27) attached on said bodies (1, 2) and that the stop (19) of each body (1, 2) forms a stop for the front end of said threaded bushes (14, 15), remote from said actuating element (4).

2. Expansion screw having two bodies (1, 2) whose spacing can be varied by means of a spindle (3), which latter comprises an actuating element (4) situated between said bodies (1, 2) and, extending therefrom, a threaded element (5) which engages in an internal thread arranged in one of said bodies (1, 2), said internal thread is formed on a threaded bush (14), that is screwed upon said threaded element (5) of said spindle (3),
that said threaded bush (14) is arranged in a recess (8) of the respective body (1) and surrounded by a spiral spring (17) which takes its bearing at one end upon an end stop (19) in the recess (8) and at its other end upon an abutment (16) formed at the back end of said threaded bush (14) neighboring said actuating element (4),
having linear guiding means (10, 11) that engage said two bodies (1, 2) and guide them linearly during variation of their spacing, while avoiding any relative rotation,
**characterized in that** the expansion screw is modified into a palatal split screw having for this purpose retaining arms (24 to 27) attached on said bodies (1, 2) and that the stop (19) of the body (1) forms a stop for the front end of said threaded bush (14), remote from said actuating element (4).

3. The palatal split screw as defined in Claim 1 or 2, **characterized in that**
the length of said spindle (3) and of said threaded bushes (13, 15) and the position of said end stop (19) in said bodies (1, 2) are tuned to ensure that said spindle (3) can act under pressure upon said two bodies (1, 2) at said end stop (19) in any position of the threaded bushes (14, 15) on said spindle (3).

4. The palatal split screw as defined in one of the preceding claims, **characterized in that** at least one of said linear guiding means (10, 11) is in positive engagement with said one or more abutments (16).

5. The palatal split screw as defined in one of the preceding claims, **characterized in that** said springs (17, 18) consist of a shape memory alloy which is pseudoelastic at the temperatures prevailing in the mouth.

6. The palatal split screw as defined in Claim 5, **characterized in that** said springs (17, 18) consist of an alloy on the basis of nickel and titanium, where nickel and titanium are present in approximately equal atomic percentages.

7. The palatal split screw as defined in one of the preceding claims, **characterized in that** said linear guiding means (10, 11) are pins which extend through bores (9) in said bodies (1, 2) and are provided on their ends (12) with abutments which, in order to limit the expansion of the palatal split screw, coact with end stops (13) formed on said bodies (1, 2) or their bores (9).

8. The palatal split screw as defined in Claim 7, **characterized in that** said bores (9) have a stepped configuration in order to form end stops (13).

## Revendications

1. Vis élastique comprenant deux corps (1, 2) dont l'écartement mutuel peut être modifié à l'aide d'une broche (3) qui possède une partie d'actionnement (4) disposée entre les deux corps (1, 2) et deux parties filetées (5, 6) s'étendant à partir de la première citée, lesdites parties possédant des sens opposés de l'enroulement et venant s'engrener dans des filets de vis internes qui sont disposés dans les corps (1, 2),
dans laquelle les filets de vis internes sont réalisés sur des manchons taraudés (14, 15) qui sont vissés sur les parties filetées (5, 6) de la broche (3),
et dans laquelle les manchons taraudés (14, 15) sont disposés dans un évidement (8) du corps respectif (1, 2) et sont entourés respectivement par un ressort de renvoi (17, 18) qui s'appuie avec sa première extrémité contre une butée (19) de l'évidement (8) et avec son autre extrémité sur un contre-appui (16) qui est réalisé à l'extrémité arrière des manchons taraudés (14, 15), voisine de la partie d'actionnement (4),
et comprenant des moyens de guidage rectiligne (10, 11) qui viennent s'engrener avec les deux corps (1, 2) et qui les guident en direction rectiligne en évitant une rotation relative lors de la modification de leur écartement,
**caractérisée en ce que** la vis élastique est soumise à un perfectionnement pour obtenir une vis destinée à une fente palatine, des bras de rétention (24 - 27) étant appliqués à cet effet sur les corps (1, 2) et **en ce que** la butée (19) du corps respectif (1, 2) forme une butée pour l'extrémité avant des manchons filetés (14, 15), éloignée de la partie d'actionnement (4).

2. Vis élastique comprenant deux corps (1, 2) dont l'écartement mutuel peut être modifié à l'aide d'une broche (3) qui possède une partie d'actionnement (4) disposée entre les deux corps (1, 2) et une partie filetée (5) s'étendant à partir de la première citée, qui vient s'engrener dans un filet de vis interne qui est disposé dans un des corps (1, 2),
dans laquelle le filet de vis interne est réalisé sur un manchon taraudé (14) qui est vissé sur la partie filetée (5) de la broche (3),
et dans laquelle le manchon taraudé (14) est disposé dans un évidement (8) du corps en question (1) et est entouré par un ressort de renvoi (17) qui s'appuie avec sa première extrémité contre une butée (19) de l'évidement (8) et avec son autre extrémité sur un contre-appui (16) qui est réalisé à l'extrémité arrière du manchon taraudé (14), voisine de la partie d'actionnement (4),
et comprenant des moyens de guidage rectiligne (10, 11) qui viennent s'engrener avec les deux corps (1, 2) et qui les guident en direction rectiligne en évitant une rotation relative lors de la modification de leur écartement,
**caractérisée en ce que** la vis élastique est soumise à un perfectionnement pour obtenir une vis destinée à une fente palatine, des bras de rétention (24 - 27) étant appliqués à cet effet sur les corps (1, 2) et **en ce que** la butée (19) du corps respectif (1, 2) forme une butée pour l'extrémité avant du manchon fileté (14), éloignée de la partie d'actionnement (4).

3. Vis destinée à une fente palatine selon la revendication 1 ou 2, **caractérisée en ce que** la longueur de la broche (3) et des manchons taraudés (14, 15), ainsi que la position de la butée (19) dans les corps (1, 2) sont coordonnées de telle sorte que dans chaque position des manchons taraudés (14, 15) sur la broche (3), les premiers cités peuvent venir s'appuyer à l'aide d'une pression exercée sur les deux corps (1, 2) contre la butée (19).

4. Vis destinée à une fente palatine selon l'une quelconque des revendications précédentes, **caractérisée en ce qu'**au moins un des moyens de guidage rectiligne (10, 11) est soumis à un engagement positif avec respectivement les contre-appuis (16).

5. Vis destinée à une fente palatine selon l'une quelconque des revendications précédentes, **caractérisée en ce que** les ressorts (17, 18) sont constitués d'un alliage conservant une mémoire de la forme qui manifeste un caractère pseudo-élastique sous l'influence des températures régnant dans la bouche.

6. Vis destinée à une fente palatine selon la revendication 5, **caractérisée en ce que** les ressorts (17, 18) sont constitués d'un alliage à base de nickel et de titane, le nickel et le titane étant contenus dans des quantités approximativement égales en atomes %.

7. Vis destinée à une fente palatine selon l'une quelconque des revendications précédentes, **caractérisée en ce que** les moyens de guidage rectiligne (10, 11) sont des tiges qui s'étendent à travers les alésages (9) des corps (1, 2) et qui possèdent à leurs extrémités (12) des contre-appuis qui coopèrent avec des butées (13) pour limiter l'élasticité de la vis destinée à la fente palatine, qui sont réalisées sur les corps (1, 2) ou dans les alésages (9) de ces derniers.

8. Vis destinée à une fente palatine selon la revendication 7, **caractérisée en ce que** les alésages (9) sont réalisés en forme de gradins pour former des butées (13).
